# EUROPÄISCHE PATENTSCHRIFT

(11) **EP 2 689 401 B1**
(45) Veröffentlichungstag und Bekanntmachung des Hinweises auf die Patenterteilung: **29.04.2015**
(21) Anmeldenummer: 12717206.2
(22) Anmeldetag: 21.03.2012
(51) Int. Cl.: G07D 11/00

(54) **VERFAHREN ZUM BETREIBEN EINER GELDKASSETTE MIT KUNDENSPEZIFISCHEN SCHLÜSSELN**
METHOD FOR OPERATING A CASH BOX WITH CUSTOMER-SPECIFIC KEYS
PROCÉDÉ DE COMMANDE D'UNE CASSETTE DE BILLETS AU MOYEN DE CLÉS SPÉCIFIQUES DE CLIENTS

(30) Priorität: 21.03.2011 DE 102011001430
(43) Veröffentlichungstag der Anmeldung: 29.01.2014
(73) Patentinhaber: Wincor Nixdorf International GmbH, 33106 Paderborn (DE)
(72) Erfinder: SCHMIDT, Christoph, 32760 Detmold (DE); RINGEL, Sascha, 33397 Rietberg (DE)
(86) Internationale Anmeldenummer: PCT/EP2012/054979
(87) Internationale Veröffentlichungsnummer: WO 2012/126937

(56) Entgegenhaltungen:
- EP-A2- 1 566 513
- WO-A1-2011/003712
- FR-A1- 2 929 429

## Beschreibung

Die Erfindung betrifft ein Verfahren zum Betreiben einer Geldkassette, bei dem werksseitig in einem Speicherelement in einer Steuereinheit der Geldkassette Programmdaten eines Produktionsbootprogramms zum Booten der Geldkassette und ein Produktionsschlüssel zum Verschlüsseln von von der Geldkassette ausgesandten Daten und/oder zum Entschlüsseln von empfangenen Daten gespeichert werden.

Die Geldkassette wird insbesondere in Vorrichtungen zur Handhabung von Wertscheinen, wie automatische Kassensystemen, automatischen Tresorkassen und/oder Geldautomaten, sowie in Dockingstationen in Cash-Centern eingesetzt. Wenn die Geldkassetten in eine der zuvor genannten Vorrichtungen eingesetzte ist, so ist zwischen der Geldkassette und der Vorrichtung eine Datenkommunikationsverbindung hergestellt, über die Daten zwischen der Vorrichtung und der Geldkassette übertragen werden können. Insbesondere können Daten übertragen werden, über die Einstellungen der Geldkassette, wie beispielsweise die Aktivierung und Deaktivierung von Entwertungseinheiten, wie beispielsweise Tintenkits, zum Entwerten von in der Geldkassette aufgenommenen Wertscheinen eingestellt werden können. Insbesondere können die Kriterien, wann eine solche Entwertungseinheit ausgelöst wird, geändert werden. Ferner ist es möglich, Timer, die für einzelne Verfahrensschritte während der Handhabung der Geldkassette zur Verfügung stehen, einzustellen und zu ändern.

Um die Übertragung solcher sicherheitsrelevanten Daten abzusichern und somit Manipulationsversuchen vorzubeugen, werden die zwischen den Vorrichtungen und der Geldkassette übertragenen Daten verschlüsselt. Ein Verfahren zum Verschlüsseln der übertragenen Daten ist beispielsweise aus Dokument DE 10 2009 032 355 bekannt. Problematisch an dem bekanntem Verschlüsselungsverfahren ist, dass durch die Verwendung eines einheitlichen Produktionsschlüssels jeder der diese Produktionsschlüssel kennt, die Daten aller im Umlauf befindlichen Geldkassetten entschlüsseln und somit die Einstellungen der Geldkassetten verändern könnte. Die Betreiber der Geldkassetten, also die Kunden, passen die sicherheitsrelevanten Einstellungen insbesondere an ihre individuellen Gegebenheiten an. Durch die Verwendung eines solchen einheitlichen Produktionsschlüssels können Geldkassetten eines Kunden, auch in die Vorrichtung eines anderen Kunden eingesetzt werden, sodass dieser andere Kunde die Einstellung des einen Kunden verändern könnte.

Aus dem nicht vorveröffentlichten Dokument DE 10 2010 061 070 ist es bekannt, mehrere Schlüssel für verschiedene Gerätegruppen zu verwenden.

Aus dem Dokument WO 2011/003712 A1 ist ein Verfahren zum Betreiben einer Geldkassette bekannt, bei dem in einem Speicherelement der Geldkassette werksseitig ein Produktionsschlüssel zum Verschlüsseln von von der Geldkassette ausgesandten Daten und/oder zum Entschlüsseln von empfangenen Daten gespeichert ist.

Das Dokument FR 2 929 429 A1 beschreibt das Ersetzen von Bootprogrammen in Computersystemen, beispielsweise wenn veraltete Programme durch neue ersetzt werden sollen.

Es ist Aufgabe der Erfindung, ein Verfahren zum Betreiben einer Geldkassette anzugeben, mit dessen Hilfe ein manipulationssicheres Betreiben der Geldkassette möglich ist.

Diese Aufgabe wird durch ein Verfahren mit dem Merkmal des Anspruchs 1 gelöst. Vorteilhafte Weiterbildungen der Erfindung sind in den abhängigen Ansprüchen angegeben.

Erfindungsgemäß wird die Geldkassette nach ihrer Herstellung zur Inbetriebnahme in eine Vorrichtung zur Aufnahme von Geldkassetten eingesetzt und eine Datenübertragungsverbindung zwischen dieser Vorrichtung und der Geldkassette hergestellt. Anschließend werden die Programmdaten des Produktionsbootprogramms durch Programmdaten eines Betriebsbootprogramms zum Booten der Geldkassette und der Produktionsschlüssel in einen kundenspezifischen Betriebsschlüssel zum Verschlüsseln von von der Geldkassette ausgesandten Daten und/oder zum Entschlüsseln von empfangenen Daten ersetzt.

Durch das Verwenden von kundenspezifischen Betriebsschlüsseln, mit deren Hilfe die Kommunikation zwischen der Geldkassette und den Vorrichtungen zur Handhabung von Wertscheinen des Kunden, in den die Geldkassette eingesetzt werden soll, verschlüsselt wird, wird erreicht, dass die Geldkassette nur in diesen Vorrichtungen des einen Kunden betrieben werden kann. Insbesondere wird hierdurch erreicht, dass Einstellungen der Geldkassette, insbesondere Sicherheitseinstellungen, wie beispielsweise die Einstellungen von Entwertungseinheiten, nur von dem Betreiber der Geldkassette, also dem Kunden, verändert werden können. Somit wird ein hohes Maß an Sicherheit erreicht. Das Ersetzen des Produktionsbootprogramms durch das Betriebsbootprogramm stellt sicher, dass die Firmware der Geldkassette nicht von unautorisierten Personen verändert werden kann, sodass die Verschlüsselung über den kundenspezifischen Betriebsschlüssel nicht umgangen werden kann. Die Kunden sind insbesondere Banken und Kreditinstitute.

Unter dem Ersetzen der Programmdaten des Bootprogramms bzw. Ersetzen des Schlüssels wird allgemein verstanden, dass nach dem Ersetzen für das Booten der Geldkassette nur noch das Betriebsbootprogramm und für die Kommunikation nur noch der kundenspezifische Betriebsschlüssel verwendet werden können. Hierbei werden insbesondere die Programmdaten des Produktionsbootprogramms durch die Programmdaten des Betriebsbootprogramms und/oder der Produktionsschlüssel durch den kundenspezifischen Betriebsschlüssel überschrieben. Alternativ können die entsprechenden Daten auch nicht überschrieben werden, sondern die Daten des Produktionsbootprogramms und der Produktionsschlüssel nach wie vor in dem Speicherelement der Geldkassette gespeichert bleiben. In diesem Fall werden die Programmdaten des Betriebsbootprogramms und des kundenspezifischen Betriebsschlüssels zusätzlich im Speicherelement gespeichert. Das Produktionsbootprogramm und der Produktionsschlüssel verlieren ihre Gültigkeit, sodass für das Booten nur noch das Betriebsbootprogramm und für das Verschlüsseln nur noch der Betriebsschlüssel verwendet werden können.

Bei der Vorrichtung zur Aufnahme von Gelkassetten, in die die Geldkassette zur Inbetriebnahme eingesetzt wird, handelt es sich insbesondere um eine sogenannte Dockingstation, über die eine Datenübertragungsverbindung zu der Geldkassette herstellbar ist. Diese Datenübertragungsverbindung ist insbesondere über eine Steckverbindung ausgebildet. Alternativ kann die Datenübertragung auch kabellos, beispielsweise über WLAN oder Funk, erfolgen. Unter einer Dockingstation wird insbesondere eine Vorrichtung verstanden, in die die Geldkassette zum Befüllen und/oder Entleeren in einem gesicherten Umfeld, beispielsweise einem Cash-Center, eingesetzt wird.

Das Produktionsbootprogramm wird insbesondere durch ein kundenspezifisches Betriebsbootprogramm ersetzt. Alternativ kann das Produktionsbootprogramm auch zunächst durch ein Standard-Betriebsbootprogramm ersetzt werden, wobei dann anschließend Daten mit Informationen über den kundenspezifischen Betriebsschlüssel über die Datenübertragungsverbindung von der Vorrichtung zu der Geldkassette übertragen werden und der Produktionsschlüssel durch den kundenspezifischen Betriebsschlüssel ersetzt wird. Durch dieses Übertragen des kundenspezifischen Betriebsschlüssels wird dann das Standard-Betriebsbootprogramm ebenfalls zu einem kundenspezifischen Betriebsbootprogramm. Hierdurch wird erreicht, dass zwar zunächst ein Ständardbetriebsprogramm einheitlich in den Speicherelementen gespeichert werden kann und trotzdem durch die kundenspezifische Individualisierung durch den Betriebsschlüssel ein Betreiben der Geldkassette nur in den Vorrichtungen zur Handhabung von Wertscheinen dieses einen Kunden möglich ist.

Die Programmdaten des Betriebsbootprogramms, die Daten mit den Informationen über den kundenspezifischen Betriebsschlüssel und/oder der kundenspezifische Betriebsschlüssels werden vorzugsweise zunächst von der Vorrichtung mit Hilfe des Produktionsschlüssels verschlüsselt und als verschlüsselte Daten über die Datenübertragungsverbindung an die Geldkassette übertragen. Die Steuereinheit der Geldkassette entschlüsselt mit Hilfe des Produktionsschlüssels anschließend diese verschlüsselten Daten und ersetzt das Produktionsbootprogramm und/oder den Produktionsschlüssel hierdurch. Somit wird eine sichere Datenübertragung erreicht, sodass Manipulationen bei der Datenübertragung und somit eventuelle spätere Manipulationen der Geldkassette vermieden werden. Insbesondere wird hierdurch erreicht, dass auch tatsächlich derjenige kundenspezifische Betriebsschlüssel gespeichert wird, der auch gespeichert werden soll.

Der kundenspezifische Betriebsschlüssel wird vorzugsweise auch in einem Speicherelement mindestens einer Vorrichtung zur Handhabung von Wertscheinen, in die die Geldkassette im Betrieb eingesetzt werden soll, gespeichert. Bei der Kommunikation zwischen der Vorrichtung und der in ihr eingesetzten Geldkassette werden die übertragenen Daten mit Hilfe dieses kundenspezifischen Betriebsschlüssels verschlüsselt. Somit wird erreicht, dass die Geldkassette nur in denjenigen Vorrichtungen zur Handhabung von Wertscheinen betrieben werden kann, für die sie bestimmt ist. Insbesondere wird in allen Vorrichtungen zur Handhabung von Wertscheinen, in die die Geldkassette im Betrieb eingesetzt werden soll, der kundenspezifische Betriebsschlüssel in jeweils einem Speicherelement gespeichert.

Die Verschlüsselung der zwischen der Vorrichtung zur Handhabung von Wertscheinen und der Geldkassette im Betrieb übertragenen Daten und/oder die Verschlüsselung der von der Vorrichtung zur Aufnahme von Geldkassetten und der Geldkassette bei der Inbetriebnahme übertragenen Daten erfolgt insbesondere mit Hilfe eines Blockverschlüsselungsalgorithmus. Somit wird eine einfache aber trotzdem sichere Verschlüsselung erreicht. Insbesondere wird für die Verschlüsselung ein Blowfish-Verschlüsselungsalgorithmus, ein Advanced Encryption Standard (AES) Verschlüsselungsalgorithmus, ein Data Encryption Standards(DES) Verschlüsselungsalgorithmus und/oder ein Extended Tiny Encryption Algorithm (XTEA) verwendet.

Bei einer bevorzugten Ausführungsform der Erfindung werden in dem Speicherelement der Geldkassette mehrere kundenspezifische Betriebsschlüssel gespeichert. In dem Speicherelement mehrere Vorrichtungen zur Handhabung von Wertscheinen ist jeweils mindestens einer dieser Betriebsschlüssel gespeichert, wobei die Kommunikation zwischen einer dieser Vorrichtungen und der in dieser Vorrichtung eingesetzten Geldkassette derart erfolgt, dass die übertragenen Daten mit Hilfe des entsprechenden in dem Speicherelement der Vorrichtung und dem Speicherelement der Geldkassette gespeicherten kundenspezifischen Betriebsschlüssel verschlüsselt übertragen werden. Somit wird erreicht, dass die Geldkassette in den Vorrichtungen zur Handhabung von Wertscheinen mehrerer Kunden und somit mehrerer Gerätegruppen betrieben werden kann.

Ferner ist es vorteilhaft, wenn die Daten zwischen der Geldkassette und der Vorrichtung zur Handhabung von Wertscheinen in die die Geldkassette eingesetzt ist, in einem sogenannten Challenge-Response-Verfahren übertragen werden. Ein solches Challenge-Response-Verfahren ist beispielsweise aus dem Dokument DE 10 2009 032 355 A1 bekannt. Der Ablauf des Challenge-Response-Verfahrens wird hiermit durch Bezugnahme in die vorliegende Beschreibung aufgenommen.

Bei einer besonders bevorzugten Ausführungsform der Erfindung umfasst das Challenge-Response-Verfahren zumindest die folgenden fünf Schritte: In einem ersten Schritt werden Daten mit Informationen zur Anforderung einer Zufallszahl von der Vorrichtung zur Handhabung von Wertscheinen in die in sie eingesetzte Geldkassette über die Datenübertragungsverbindung übertragen. Anschließend in einem zweiten Schritt erzeugt die Geldkassette mit Hilfe eines in der Steuereinheit hinterlegten Zufallszahlenerzeugungsalgorithmus eine Zufallszahl und verschlüsselt diese Zufallszahl bevor die Geldkassette sie an die Vorrichtung über die Datenübertragungsverbindung überträgt. In einem dritten Schritt entschlüsselt die Vorrichtung die verschlüsselte Zufallszahl und erzeugt Daten mit mindestens einem Steuerungsbefehl, wobei diese Daten die Zufallszahlen umfassen. Anschließend, im vierten Schritt, verschlüsselt die Vorrichtung diese Daten mit dem kundenspezifischen Betriebsschlüssel und überträgt die verschlüsselten Daten an die Geldkassette. In einem fünften Schritt entschlüsselt die Geldkassette die an sie übertragenen Daten mit Hilfe des kundenspezifischen Betriebsschlüssels und vergleicht die in den entschlüsselten Daten enthaltene Zufallszahl mit derjenigen Zufallszahl, die von dem Zufallszahlenerzeugungsalgorithmus im zweiten Schritt erzeugt wurde.

Ergibt dieser Vergleich, dass die erzeugte und die im vierten Schritt übermittelte Zufallszahl übereinstimmen, so führt die Geldkassette den übertragenen Steuerungsbefehl aus. Ergibt der Vergleich dahingegen, dass die Zufallszahlen nicht übereinstimmen, so führt die Geldkassette den Steuerungsbefehl nicht aus. Insbesondere erzeugt die Geldkassette in diesem Fall eine Fehlermeldung und speichert die Daten mit Informationen über diese Fehlermeldung in einem Speicherelement und/oder überträgt Daten mit Informationen über diese Fehlermeldung an die Vorrichtung, in der die Geldkassette aufgenommen ist. Diese wiederum zeigt insbesondere die Fehlermeldung über eine Anzeigeeinheit an.

Durch das zuvor beschriebene Challenge-Response-Verfahren wird eine sehr sichere Datenübertragung zwischen der Vorrichtung und der in sie eingesetzten Geldkassette erreicht. Durch das Verschlüsseln mit dem kundenspezifischen Betriebsschlüssel wird ferner erreicht, dass die Kommunikation zwischen der Geldkassette und der Vorrichtung nur dann möglich ist, wenn dieser kundenspezifische Betriebsschlüssel sowohl in dem Speicherelement mit der Geldkassette als auch in dem Speicherelement der Vorrichtung gespeichert ist. Somit kann die Geldkassette nur in denjenigen Vorrichtungen betrieben werden, für die sie auch bestimmt ist.

Der aktuelle kundenspezifische Betriebsschlüssel, der aktuell in dem Speicherelement der Geldkassette gespeichert ist und mit Hilfe dessen die von der Geldkassette ausgesandten und von der Geldkassette empfangenen Daten verschlüsselt bzw. entschlüsselt werden, kann insbesondere nur mit Hilfe dieses aktuellen kundenspezifischen Betriebsschlüssel verändert werden. Dies wird insbesondere dadurch erreicht, dass von der Geldkassette, bzw. der Steuereinheit der Geldkassette, nur die empfangenen Daten verarbeitet werden, die mit dem aktuellen kundenspezifischen Betriebsschlüssel verschlüsselt sind. Daten, die mit einem anderen Betriebsschlüssel verschlüsselt sind, können von der Geldkassette nicht entschlüsselt werden und unverschlüsselte Daten werden insbesondere nicht abgearbeitet. Somit wird insbesondere erreicht, dass eine Kommunikation zwischen der Geldkassette und einer anderen Vorrichtung nur über mit dem aktuellen kundenspezifischen Betriebsschlüssel verschlüsselte Daten möglich ist und somit auch ein Ändern des Betriebsschlüssels nur bei Kenntnis des aktuellen kundenspezifischen Betriebsschlüssels erfolgen kann.

Das Speicherelement der Geldkassette umfasst insbesondere einen Flash-Speicher, in dem die Daten des Produktionsbootprogramms, die Daten des Betriebsbootprogramms, der Produktionsschlüssel und/oder der Betriebsschlüssel gespeichert sind. Somit ist ein einfacher Aufbau des Speicherelements der Geldkassette gewährleistet.

In dem Speicherelement der Geldkassette ist vorzugsweise eine Firmware zum Betreiben der Geldkassette gespeichert. Die Signatur ist insbesondere ein One-Key-Message-Authentication-Code (OMAC), der auf einem Blockverschlüsselungsalgorithmus basiert.

Bei einer bevorzugten Ausführungsform der Erfindung wird der kundenspezifische Betriebsschlüssel als Teil dieser Firmware gespeichert. Hierdurch wird ein besonders hohes Maß an Sicherheit erreicht, da eine Manipulation des kundenspezifischen Betriebsschlüssels in der Regel dazu führt, dass auch die Firmware manipuliert ist und somit ein Betreiben der Geldkassette nicht mehr möglich ist.

Die Firmware umfasst insbesondere eine Signatur. Die Steuereinheit ermittelt in Abhängigkeit dieser Signatur die Zulässigkeit der Firmware, in dem sie mit Hilfe der Signatur überprüft, ob die Firmware verändert wurde. Die Signatur ist insbesondere eine Signatur, die den Hersteller der Geldkassette und/oder ein Serviceunternehmen, das mit der Wartung der Geldkassette beauftragt ist, eindeutig identifiziert. Der Betrieb der Geldkassette ist insbesondere nur dann möglich, wenn die Signatur der Firmware eindeutig diesen Hersteller bzw. dieses Serviceunternehmen, der bzw. das zum Ändern der Firmware auch tatsächlich berechtigt ist, identifiziert und/oder wenn die Steuereinheit mit Hilfe der Signatur ermittelt hat, dass die Signatur nicht unzulässig verändert wurde.

Sollte die Überprüfung der Zulässigkeit ergeben, dass die Firmware eine abweichende und somit falsche Signatur umfasst, ist der Betrieb der Geldkassette nicht möglich. Hierdurch wird einer Manipulation der Firmware und einer Manipulation der Geldkassette vorgebeugt. Die Überprüfung der Firmware erfolgt insbesondere bei jedem Booten der Geldkassette. Zusätzlich oder alternativ kann diese Überprüfung auch in voreingestellten Zeitintervallen erfolgen.

Ferner ist es vorteilhaft, wenn die Firmware nur mit Hilfe des kundenspezifischen Betriebsschlüssels verändert werden kann. Hierdurch wird erreicht, dass die Firmware nur von autorisierten Personen, nämlich von Personen, die selbst über den kundenspezifischen Betriebsschlüssel verfügen, verändert werden kann. Somit wird einer Manipulation der Firmware und somit der Geldkassette vorgebeugt. Insbesondere arbeitet die Steuereinheit der Geldkassette nur diejenigen an sie übertragenen Daten ab, die mit dem kundenspezifischen Betriebsschlüssel verschlüsselt sind. Daten die mit einem anderen Schlüssel verschlüsselt sind, können von der Geldkassette nicht entschlüsselt werden und Daten, die überhaupt nicht verschlüsselt sind, werden von der Geldkassette nicht verarbeitet. Vorzugsweise wird die zusammen mit der Firmware übertragene Signatur mit Hilfe des kundenspezifischen Betriebsschlüssels verschlüsselt, sodass die Signatur nur mit Hilfe des kundenspezifischen Betriebsschlüssels verarbeitet und/oder verändert werden kann.

Weitere Merkmale und Vorteile der Erfindung ergeben sich aus der folgenden Beschreibung, die die Erfindung anhand von Ausführungsbeispielen in Zusammenhang mit den beigefügten Figuren näher erläutert.

Es zeigen:
- Figur 1: eine schematische Darstellung einer Geldkassette;
- Figur 2: eine schematische Darstellung eines Geldautomaten und der in diesem Geldautomaten eingesetzten Geldkassette nach Figur 1;
- Figur 3: ein Ablaufdiagramm eines Verfahrens zur Inbetriebnahme der Geldkassette;
- Figur 4: eine schematische Darstellung des Betreibens der Geldkassette gemäß einem ersten Ausführungsbeispiel;
- Figur 5: eine schematische Darstellung des Betreibens der Geldkassette gemäß einem zweiten Ausführungsbeispiels;
- Figur 6: eine schematische Darstellung des Betreibens der Geldkassette gemäß eines dritten Ausführungsbeispiels; und
- Figur 7: eine schematische Darstellung des Betreibens der Geldkassette gemäß eines vierten Ausführungsbeispiels.

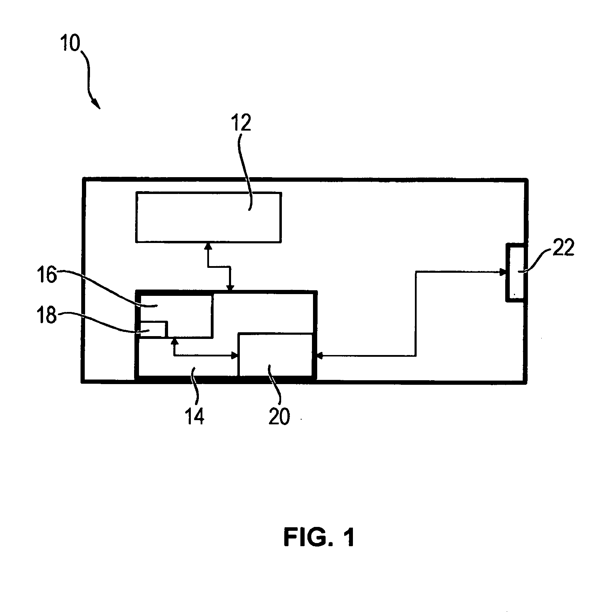

In Figur 1 ist eine schematische Darstellung einer Geldkassette 10 dargestellt. Die Geldkassette 10 umfasst eine Entwertungseinheit 12 zum irreversiblen Entwerten von in der Geldkassette aufgenommenen, nicht dargestellten Wertscheinen und eine Steuereinheit 14 zum Steuern der Entwertungseinheit 12. Die Steuereinheit 14 steuert die Entwertungseinheit 12 insbesondere derart an, dass diese die in der Geldkassette 10 aufgenommenen Wertscheine dann entwertet, wenn ein Manipulationsversuch vorliegt. Hierzu umfasst die Geldkassette 10 insbesondere eine Vielzahl von nicht dargestellten Sensoren, mit deren Hilfe Manipulationsversuche detektierbar sind. Solche Sensoren können beispielsweise Lage-, Erschütterungs-, Gas-, Flüssigkeitssensoren und/oder Sensoren zur Ermittlung des Öffnens eines Deckels der Geldkassette 10 sein.

Die Entwertungseinheit 12 ist insbesondere in Form eines sogenannten Tintenkits ausgebildet, dass beim Auslösen die in der Geldkassette 10 aufgenommenen Wertscheine mit Hilfe eines Farbstoffes irreversibel einfärbt, sodass diese eingefärbten Wertscheine von einem potenziellen Dieb nicht in Umlauf gebracht werden können und somit für ihn wertlos sind.

Die Wertscheine können in der Geldkassette 10 sowohl in gestapelter Form in einem Aufnahmebereich aufgenommen als auch auf einem Rollenspeicher aufgewickelt sein. Ein solcher Rollenspeicher umfasst insbesondere zwei Folienbänder, zwischen denen die Wertscheine aufgenommen sind.

Die Steuereinheit 14 umfasst einen Mikroprozessor 16, ein erstes Speicherelement 18 und ein zweites Speicherelement 20. Das erste Speicherelement 18 und das zweite Speicherelement 20 sind insbesondere jeweils in Form eines nichtflüchtigen Speichers, beispielsweise in Form eines Flash-Speichers oder eines EEPROMs, ausgebildet. Bei einer alternativen Ausführungsform können das erste und das zweite Speicherelement 18, 20 auch in Form anderer Speicherelementarten ausgebildet sein. Ferner ist es alternativ möglich, dass die Steuereinheit 14 lediglich ein Speicherelement 18, 20 umfasst. In dem zweiten Speicherelement 20 sind insbesondere Daten mit Informationen über den Bestand der Geldkassette 10 an Wertscheinen, Daten mit Informationen über Manipulationsversuche und/oder Daten mit Informationen über die Wartung der Geldkassette 10 gespeichert.

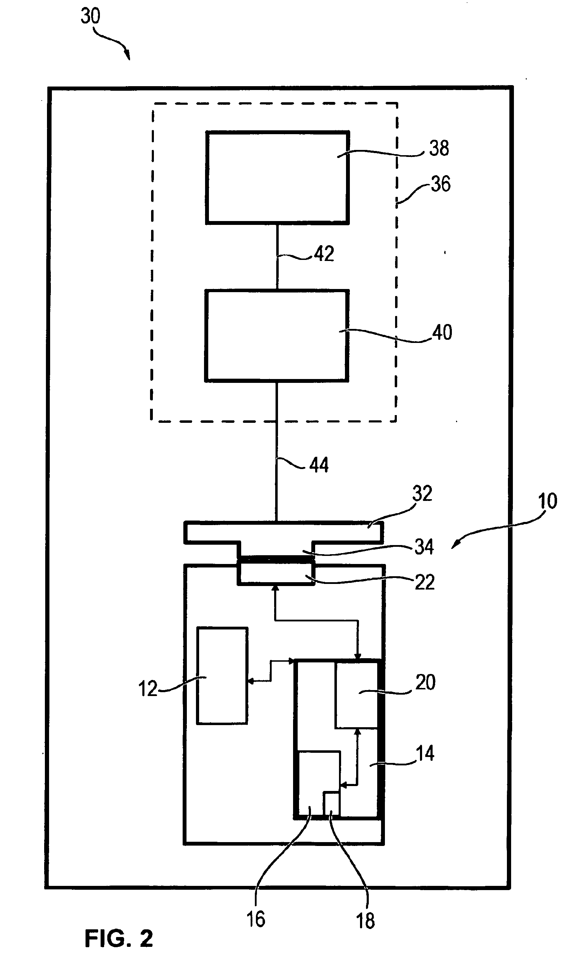

In dem ersten Speicherelement 18 sind insbesondere Daten einer Firmware zum Betreiben einer Geldkassette 10 und Daten eines Bootprogramms zum Booten der Geldkassette 10 gespeichert. Die Firmware umfasst insbesondere einen Zufallszahlen-Erzeugungsalgorithmus zum Erzeugen von Zufallszahlen und mindestens einem Schlüssel zum Verschlüsseln von auszusendenden Daten und zum Entschlüsseln von empfangenen Daten. Die Verschlüsselung und Entschlüsselung der Daten sowie die Verwaltung der hierzu verwendeten Schlüssel werden im Folgenden in Zusammenhang mit den Figuren 2 bis 7 noch näher erläutert.

Ferner hat die Geldkassette 10 einen Steckverbinder 22, über den eine Datenübertragungsverbindung zwischen der Geldkassette 10 und Vorrichtungen 30, in die die Geldkassette 10 eingesetzt ist, hergestellt werden kann. Bei einer alternativen Ausführungsform kann zusätzlich oder alternativ zum Steckverbinder 22 noch eine andere Sende- und/oder Empfangseinheit zum Senden und/oder Empfangen von Daten vorgesehen sein. Insbesondere kann das Senden und Empfangen der Daten auch kabellos, beispielsweise über Mobilfunk, erfolgen.

In Figur 2 ist dargestellt, wie die Geldkassette 10 in eine Vorrichtung 30 eingesetzt ist. Bei dieser Vorrichtung 30 kann es sich beispielsweise um einen Geldautomaten, eine automatische Tresorkasse, ein automatisches Kassensystem und/oder um ein Rack zum Zwischenspeichern von Geldkassetten 10 handeln. Ein solches Rack kann beispielsweise in einem Werttransportfahrzeug angeordnet sein.

Die Vorrichtung 30 umfasst eine Sende- und Empfangseinheit 32 zum Senden von Daten an die Geldkassette 10 und zum Empfangen von Daten von der Geldkassette 10. Diese Sende- und Empfangseinheit 32 hat einen Steckverbinder 34, der komplementär zu dem Steckverbinder 22 der Geldkassette 10 ausgebildet ist, sodass, wenn die Geldkassette 10, wie in Figur 2 gezeigt, in die Vorrichtung 10 eingesetzt ist, über die zwischen den Steckverbindern 34 und 22 hergestellte Steckverbindung eine Datenübertragungsverbindung herstellbar ist.

Ferner hat die Vorrichtung 30 eine Steuereinheit 36, die in dem in Figur 2 gezeigten Ausführungsbeispiel eine erste Sub-Steuereinheit 38 und eine zweite Sub-Steuereinheit 40 umfasst, die über eine USB-Datenübertragungsverbindung 42 miteinander verbunden sind. Bei einer alternativen Ausführungsform der Erfindung kann die Steuereinheit 36 auch nicht zwei Sub-Steuereinheiten 38, 40 umfassen, sondern als eine einzige Steuereinheit 36 ausgebildet sein. Die Steuereinheit 36, insbesondere die zweite Sub-Steuereinheit 40, ist über einen CAN-Bus 44 zur Datenübertragung mit der Sende- und Empfangseinheit 32 verbunden. Somit kann über die zwischen den Steckverbindern 22, 34 ausgebildete Datenübertragungsverbindung eine Übertragung von Daten zwischen der Steuereinheit 36 der Vorrichtung 30 und der Steuereinheit 14 der Geldkassette 10 erfolgen.

Bei der ersten Sub-Steuereinheit 38 handelt es sich insbesondere um einen Computer, auf dem eine handelsübliche Software zum Betreiben dieses Computers, insbesondere eines Standardbetriebssystem, verwendet wird. Die zweite Sub-Steuereinheit 40 ist insbesondere ein speziell für die Vorrichtung 30 entwickelte Elektronik, der Programmdaten einer Master-Firmware, die speziell auf den Einsatz in der Vorrichtung 30 und die Handhabung der sicherheitsrelevanten Daten abgestimmt ist, verwendet wird. Bei einer alternativen Ausführungsform der Erfindung können auch andere Sub-Steuereinheiten 38, 40 verwendet werden. Insbesondere können die Datenübertragungsverbindungen 42, 44 auch anderes als zuvor beschrieben nicht über eine USB-Datenübertragungsverbindung bzw. ein CAN-Bus, sondern über andere Datenübertragungsverbindungen ausgebildet sein.

Die Geldkassette 10 kann in verschiedenen Betriebsmodi Betrieben werden, wobei in einem abgeschalteten Betriebsmodus die Steuereinheit 14 die Entwertungseinheit 12 nicht auslöst, unabhängig davon, ob von den Sensoren ein Manipulationsversuch detektiert wird oder nicht. Bei einem aktivierten Betriebsmodus dahingegen sind alle Sensoren aktiviert, sodass die Steuereinheit 14, wenn mindestens einer dieser Sensoren einen Manipulationsversuch detektiert, die Entwertungseinheit 12 auslöst, sodass die in der Geldkassette 10 aufgenommenen Wertscheine entwertet werden. In einem Transportmodus sind nur ein Teil der Sensoren aktiviert. Insbesondere sind im Transportmodus die Lagersensoren deaktiviert.

Wenn die Geldkassette 10 in der Vorrichtung 30 aufgenommen ist, können über die zwischen den Steckverbindern 22, 34 hergestellte Datenverbindungen insbesondere Daten übertragen werden, mit deren Hilfe der Betriebsmodus der Geldkassette 10 eingestellt werden kann. Ferner können über die übertragenen Daten auch weitere sicherheitsrelevante Einstellungen der Geldkassette 10, wie beispielsweise das Festlegen von Timern für einzelne Prozessschritte während des Betriebes der Geldkassette 10, eingestellt bzw. verändert werden.

Um Manipulationsversuche, insbesondere ein unautorisiertes Verstellen der Betriebsmodi oder der Timer, zu verhindern und um vertrauliche Daten zu schützen, werden die Daten über die Datenübertragungsverbindung zwischen der Sende- und Empfangseinheit 32 und der Geldkassette 10 verschlüsselt übertragen. Hierzu ist in der Steuereinheit 36 der Vorrichtung 30 und in dem Speicherelement 18 der Steuereinheit 14 der Geldkassette 10 ein kundenspezifischer Betriebsschlüssel gespeichert. Dieser kundenspezifische Betriebsschlüssel stellt sicher, dass die Geldkassette 10 nur in denjenigen Vorrichtungen 30 betrieben werden kann, die der Kunde, also der Betreiber der Geldkassette 10, betreibt, also denjenigen Vorrichtungen 30, für die die Geldkassette 10 verwendet werden soll. Durch solche kundenspezifischen Betriebsschlüssel wird insbesondere erreicht, dass, wenn die Geldkassette 10 in fremden Vorrichtungen eingesetzt ist, die Einstellungen der Geldkassette 10 nicht verändert werden können und keine Daten aus der Geldkassette 10 ausgelesen werden können. Somit wird die Sicherheit weiter erhöht.

Die Verschlüsselung mit Hilfe des kundenspezifischen Betriebsschlüssels erfolgt insbesondere über einen Blockverschlüsselungsalgorithmus, wozu Daten dieses Blockverschlüsselungsalgorithmus in der Steuereinheit 30 und der Steuereinheit 14 gespeichert sind und diese Daten bei der Verschlüsselung abgearbeitet werden.

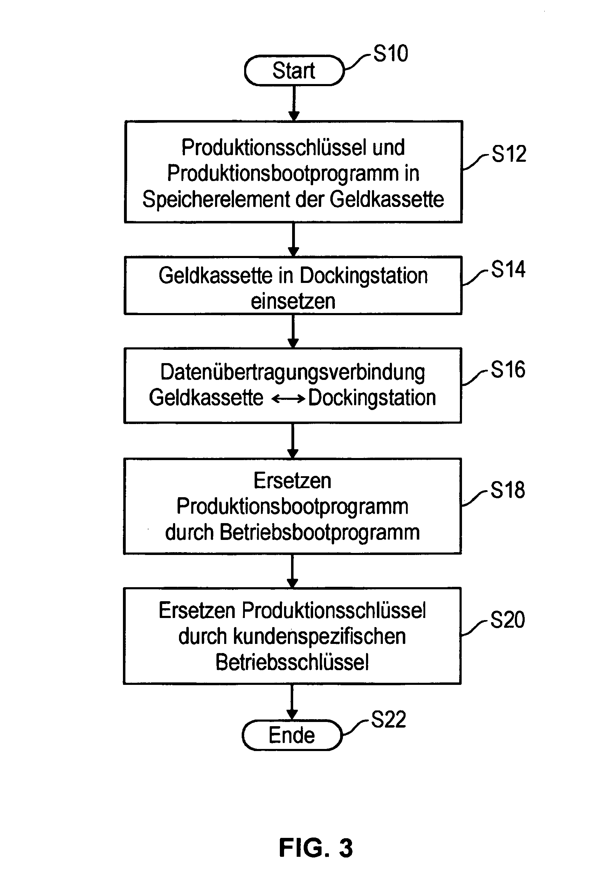

In Figur 3 ist ein Flussdiagramm des Ablaufes der Inbetriebnahme der Geldkassette 10 dargestellt. Nachdem das Verfahren im Schritt S10 gestartet wurde, werden im Schritt S12 bei der werksseitigen Herstellung der Geldkassette 10 Daten eines Produktionsbootprogramms zum Booten der Geldkassette 10 und eines Produktionsschlüssels zum Verschlüsseln der von der Geldkassette 10 auszusenden Daten und zum Entschlüsseln von empfangenen Daten in dem Speicherelement 18 der Steuereinheit 14 der Geldkassette 10 gespeichert. Dieser Produktionsschlüssel und dieses Produktionsbootprogramm werden bei allen von dem Hersteller der Geldkassetten 10 hergestellten Geldkassetten einheitlich in dem jeweiligen Speicherelement 18 gespeichert, sodass unabhängig von der Geldkassette 10 alle während der Inbetriebnahme zu übertragenden Daten und/oder alle Funktionsprüfungen vor der Auslieferung der Geldkassette 10 an den Kunden mit Hilfe dieses Produktionsschlüssels und dieses Produktionsbootprogramms erfolgen können.

Anschließend wird im Schritt S14 die Geldkassette in eine sogenannte Dockingstation eingesetzt, und im Schritt S16 eine Datenübertragungsverbindung zwischen der Geldkassette 10 der Dockingstation hergestellt. Als nächstes werden im Schritt S18 Daten eines Betriebsbootprogramms über diese Datenübertragungsverbindung von der Dockingstation an die Geldkassette 10 übertragen, wobei diese Daten des Betriebsbootprogramms die Daten des Produktionsbootprogramms ersetzen. Unter dem Ersetzen wird allgemein verstanden, dass nur noch ausschließlich das Betriebsbootprogramm und nicht mehr das Produktionsbootprogramm verwendbar ist. Hierzu können die Daten des Produktionsbootprogramms in dem Speicherelement 18 durch die Daten des Betriebsbootprogramms überschrieben werden. Alternativ ist möglich, dass sowohl die Daten des Produktionsbootprogramms als auch die Daten des Betriebsbootprogramms in dem Speicherelement 18 gespeichert sind, aber die Daten des Produktionsbootprogramms ihre Gültigkeit verlieren verwendet werden.

Bei einer bevorzugten Ausführungsform der Erfindung verschlüsselt die Dockingstation die Daten des Betriebsbootprogramms mit dem Produktionsschlüssel und die Steuereinheit 14 der Geldkassette 10 entschlüsselt die übertragenen Daten entsprechend mit dem Produktionsschlüssel. Somit wird eine sichere Datenübertragung erreicht.

Anschließend werden im Schritt S20 Daten mit einem kundenspezifischen Betriebsschlüssel von der Dockingstation an die Geldkassette 10 übertragen, wobei dieser kundenspezifische Betriebsschlüssel den Produktionsschlüssel ersetzt. Hierbei verschlüsselt vorzugsweise die Dockingstation wiederum diesen kundenspezifischen Betriebsschlüssel mit dem Produktionsschlüssel und überträgt die entsprechenden Daten verschlüsselt an die Geldkassette 10, die wiederum die empfangenen Daten mit dem Produktionsschlüssel entschlüsselt und den Produktionsschlüssel durch den kundenspezifischen Betriebsschlüssel ersetzt. Anschließend wird das Verfahren im Schritt S22 beendet.

Durch dieses Verfahren wird erreicht, dass zunächst bei der Herstellung der Geldkassetten 10 einheitliche Produktionsschlüssel und Produktionsbootprogramme verwendet werden können, sodass die Funktionsprüfung der Geldkassetten 10 einheitlich erfolgen kann und eine einheitliche Fertigung möglich ist. Die Individualisierung der Geldkassette 10 entsprechend des spezifischen Kunden erfolgt erst bei der Inbetriebnahme, sodass anschließend während des Betriebes der Geldkassette 10 diese nur in Vorrichtungen 30 betrieben werden kann, die auch über die kundenspezifischen Betriebsschlüssel verfügen. Somit wird insgesamt eine einfache Herstellung der Geldkassette 10 und dennoch eine hohe kundenspezifische Sicherheit erreicht.

Bei einer alternativen Ausführungsform der Erfindung können die Schritte S18 und S20 auch vertauscht sein, d. h. es kann erst der kundenspezifische Betriebsschlüssel und dann das Betriebsbootprogramm übertragen werden. Ferner ist es alternativ möglich, dass das Betriebsbootprogramm und der kundenspezifische Betriebsschlüssel gemeinsam in einem Schritt übertragen werden.

Eine Änderung des kundenspezifischen Betriebsschlüssels ist insbesondere nur bei Kenntnis des aktuell in dem Speicherelement 18 gespeicherten kundenspezifischen Betriebsschlüssels möglich. Ohne den aktuell im Speicherelement 18 gespeicherten kundenspezifischen Betriebsschlüssel kann dieser nicht verändert werden. Hierzu ist die Steuereinheit 14 insbesondere derart ausgelegt, dass sie nur Daten verarbeitet bzw. nur Befehle ausführt, die mit Hilfe des aktuell in dem Speicherelement 18 gespeicherten kundenspezifischen Betriebsschlüssels verschlüsselt sind. Die Daten, die mit einem anderen Schlüssel verschlüsselt sind und/oder unverschlüsselt an die Steuereinheit 14 übertragen wurden, werden dagegen nicht verarbeitet bzw. die entsprechenden Befehle nicht ausgeführt.

Die Firmware der Geldkassette 10 enthält insbesondere eine Signatur, die den Ersteller der Firmware eindeutig identifiziert und/oder die sicherstellt, dass die Firmware nicht verändert wurde. Das Betriebsbootprogramm umfasst vorzugsweise einen Signaturschlüssel, mit dessen Hilfe die Steuereinheit 14 überprüfen kann, ob die Firmware von dem autorisierten Hersteller erstellt wurde und/oder ob die Firmware während der Übertragung verändert wurde. Ermittelt die Steuereinheit 14, dass der Hersteller der in dem Speicherelement 18 gespeicherten Signatur nicht hierzu autorisiert war und/oder dass die Firmware verändert wurde, so ist ein Betreiben der Geldkassette 10 nicht möglich und es wird insbesondere eine Fehlermeldung in dem zweiten Speicherelement 20 gespeichert und/oder eine Fehlermeldung ausgegeben. Der Signaturschlüssel entspricht insbesondere dem kundenspezifischen Betriebsschlüssel. Die Signatur ist insbesondere ein elektronische Signatur, vorzugsweise eine digitale Signatur.

Auf diese Weise wird verhindert, dass die Firmware manipuliert wird. Somit wird die Sicherheit weiter erhöht, da durch das Verhindern der Manipulation der Firmware auch ein Umgehen der Verschlüsselung über den Betriebsschlüssel ausgeschlossen wird.

Zusätzlich oder alternativ zu der Signierung kann ein Verändern der Firmware auch dadurch vermieden werden, dass die eine Veränderung der Firmware nur bei Kenntnis des kundenspezifischen Betriebsschlüssels möglich ist. Ohne kundenspezifischen Betriebsschlüssel kann die Firmware nicht verändert werden, sodass unautorisierte Personen keinen Zugriff hierauf haben.

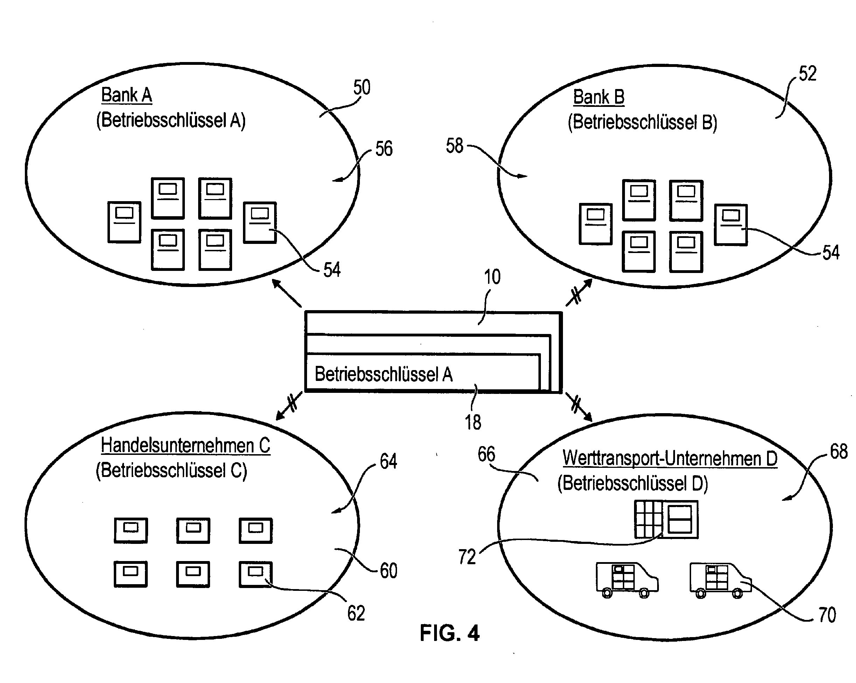

Figur 4 ist eine schematische Darstellung des Betriebes der Geldkassette 10 gemäß einem ersten Ausführungsbeispiel gezeigt. Bei diesem Ausführungsbeispiel ist in dem ersten Speicherelement 18 der Geldkassette 10 lediglich ein erster kundenspezifischer Betriebsschlüssel A gespeichert.

Ferner sind in Figur 4 zwei Banken 50, 52 dargestellt, die jeweils eine eine Vielzahl von Geldkautomaten 54 umfassende Gerätegruppe 56, 58 betreiben. Ferner ist ein Handelsunternehmen 60 dargestellt, das eine aus mehreren automatischen Tresorkassen 62 bestehende Gerätegruppe 64 betreibt. Darüber hinaus ist ein Werttransportunternehmen 66 schematisch gezeigt, das eine Gerätegruppe 68 hat, die mehrere Werttransportfahrzeuge 70 umfasst, in denen jeweils mindestens ein Rack 72 zur Aufnahme von Geldkassetten 10 vorhanden ist.

Die erste Bank 50 verwendet für die Datenübertragung zwischen den Geldautomaten 54 ihrer Gerätegruppe 56 und in diese Geldautomaten 54 eingesetzten Geldkassetten 10 den ersten Betriebsschlüssel A. Im Gegensatz hierzu verwendet die zweite Bank 58 für die Geldautomaten 54 iherer Gerätegruppe 58 einen von dem ersten Betriebsschlüssel A abweichende Betriebsschlüssel B. Ebenso verwenden auch das Handelsunternehmen 60 und das Werttransportunternehmen 66 für die Kommunikation der Geräte 62, 72 ihrer Gerätegruppen 64, 68 mit Geldkassetten 10 eigene kundenspezifische Betriebsschlüssel C bzw. D.

Da bei dem ersten Ausführungsbeispiel in der Geldkassette 10 lediglich der kundenspezifische Betriebsschlüssel A gespeichert ist, kann die Geldkassette 10 nur in den Geldautomaten 54 der ersten Gerätegruppe 56 der ersten Bank 50 betrieben werden. Wird die Geldkassette 10 in einen Geldautomaten 54 der zweiten Gerätegruppe 58, eine automatische Tresorkasse 62 der dritten Gerätegruppe 64 oder ein Rack 72 der vierten Gerätegruppe 68 eingesetzt, so kann eine Kommunikation zwischen der Geldkassette 10 und dem entsprechenden Gerät 54, 62, 72 nicht erfolgen, da die Steuereinheit 14 der Geldkassette 10 die von dem Gerät 54, 62, 72 übertragenen verschlüsselten Daten nicht entschlüsseln kann und umgekehrt die Geräte 54, 62, 72 die von der Geldkassette 10 diesen übertragenen Daten nicht entschlüsseln können.

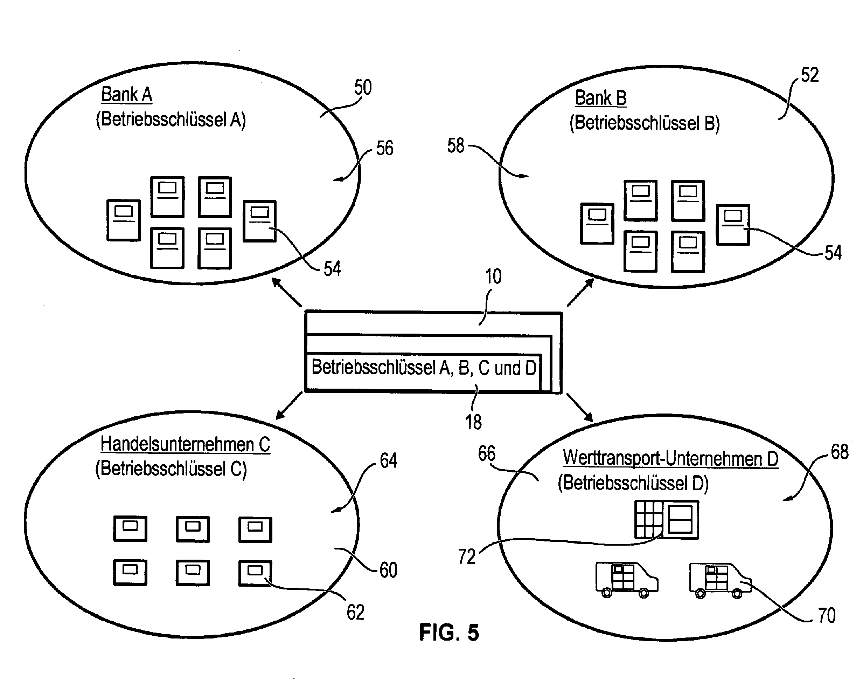

In Figur 5 ist eine schematische Darstellung des Betriebes der Geldkassette 10 gemäß einem zweiten Ausführungsbeispiel gezeigt. Bei diesem zweiten Ausführungsbeispiel sind in dem Speicherelement 18 der Geldkassette 10 sowohl der kundenspezifische Betriebsschlüssel A, der kundenspezifische Betriebsschlüssel B, der kundenspezifische Betriebsschlüssel C als auch der kundenspezifische Betriebsschlüssel D gespeichert. Somit ist eine Kommunikation zwischen der Geldkassette 10 und den Geldautomaten 54 der ersten Gerätegruppe 56, der Geldkassette 10 und den Geldautomaten 54 der zweiten Gerätegruppe 58, der Geldkassette 10 und den automatischen Tresorkassen 62 der dritten Gerätegruppe 64 und der Geldkassette 10 und den Racks 72 der vierten Gerätegruppe 68 möglich, sodass die Geldkassette 10 in allen vier Gerätegruppen 56, 58, 64, 68 betrieben werden kann.

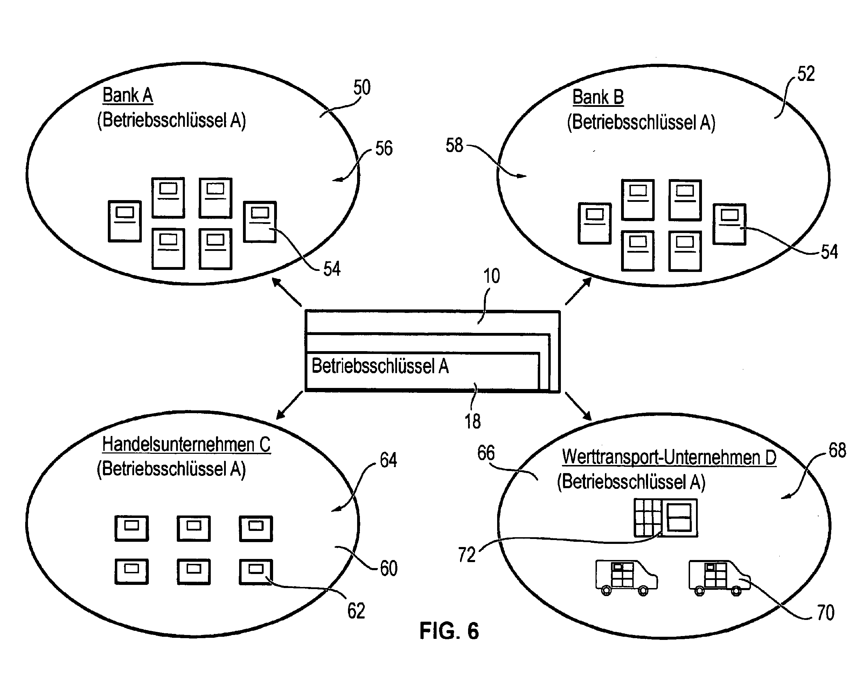

In Figur 6 ist eine schematische Darstellung des Betriebes der Geldkassette 10 gemäß einem dritten Ausführungsbeispiel gezeigt. Bei diesem dritten Ausführungsbeispiel ist in dem Speicherelement 18 der Geldkassette 10 lediglich der ersten kundenspezifische Betriebsschlüssel A gespeichert. Im Unterschied zu den ersten beiden Ausführungsbeispielen stellt die erste Bank 50 sowohl der zweiten Bank 52, als auch dem Handelsunternehmen 60, als auch dem Wertscheintransportunternehmen 66 ihren kundenspezifischen Betriebsschlüssel A zur Verfügung, so dass auch die Geräte der Gerätegruppen 58, 64, 68 zur Kommunikation mit der Geldkassette 10 diesen kundenspezifischen Betriebsschlüssel A verwenden können, sodass die Geldkassette 10 in allen vier Gerätegruppen 56, 58, 64, 68 betrieben werden kann.

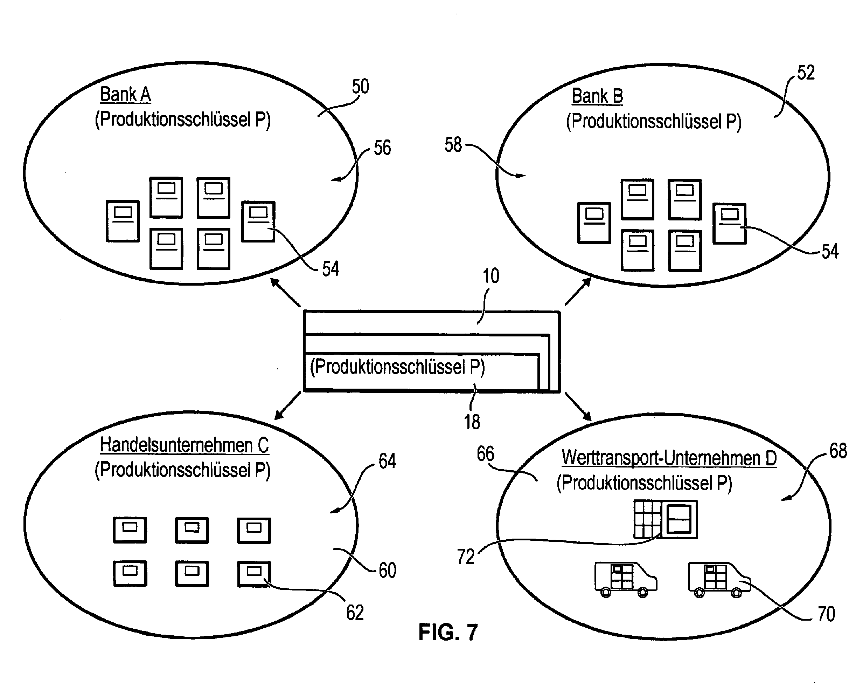

In Figur 7 ist eine schematische Darstellung des Betriebes der Geldkassette 10 gemäß einem vierten Ausführungsbeispiel gezeigt. Bei diesem vierten Ausführungsbeispiel wurde der Produktionsschlüssel P in dem Speicherelement 18 nicht durch einen kundenspezifischen Betriebsschlüssel ersetzt. Insbesondere wurde das Verfahren gemäß Figur 3 zur Inbetriebnahme der Geldkassette 10 nicht abgearbeitet. Die Banken 50, 52, das Handelsunternehmen 60 und das Wertscheintransportunternehmen 66 verfügen ebenfalls über diesen standardisierten Produktionsschlüssel P, sodass die Geldkassette 10 in allen Gerätegruppen 56, 58, 64, 68 betrieben werden kann.

In dem ersten Speicherelement 18 sind insbesondere mindestens 64 Bit für den kundenspezifischen Betriebsschlüssel reserviert. Bei einer bevorzugten Ausführungsform können nicht nur ein kundenspezifischer Betriebsschlüssel sondern 32 verschiedene kundenspezifische Betriebsschlüssel in dem ersten Speicherelement 18 gespeichert werden. Um dies zu ermöglichen sind bei einer Schlüssellänge von mindestens 64 Bit mindestens 256 Byte des Speicherelementes 18 für die kundenspezifischen Betriebsschlüssel reserviert.

Die Kommunikation zwischen der Geldkassette 10 mit den Vorrichtungen 30, 54, 62, 72 erfolgt insbesondere über ein sogenanntes Challenge-Response-Verfahren. Bei diesem Challenge-Response-Verfahren überträgt die Vorrichtung 30, 54, 62, 72 zunächst einen Befehl an die Geldkassette 10, eine Zufallszahl zu erzeugen. In der Steuereinheit 14 ist ein Zufallszahlenerzeugungsalgorithmus gespeichert, mit dessen Hilfe die Steuereinheit 14 der Geldkassette 10 daraufhin eine Zufallszahl erzeugt. Damit diese Zufallszahl nicht durch Dritte abgefangen werden kann, verschlüsselt die Geldkassette 10 die Zufallszahl mit Hilfe eines Challenge-Keys und überträgt die verschlüsselte Zufallszahl anschließend an die Vorrichtung 30, 54, 62, 72. Die Vorrichtung 30, 54, 62, 72 entschlüsselt daraufhin die von der Geldkassette 10 empfangenen Daten mit Hilfe dieses Challenge-Keys und erzeugt Daten mit Informationen über einen von der Geldkassette 10 auszuführenden Befehl, wobei diese Daten die Zufallszahl umfassen. Die Vorrichtung 30, 54, 62, 72 verschlüsselt diese Daten über den kundenspezifischen Betriebsschlüssel und überträgt die verschlüsselten Daten an die Geldkassette 10, die daraufhin die Daten wieder mit Hilfe des kundenspezifischen Betriebsschlüssels entschlüsselt.

Anschließend vergleicht die Steuereinheit 14 die in den Daten enthaltene Zufallszahl mit der ursprünglich von dem Zufallszahlenalgorithmus erzeugten Zufallszahl. Stimmen die beiden Zufallszahlen überein, so führt die Geldkassette 10 den in den Daten enthaltenen Befehl aus. Stimmen die Zufallszahlen dahingegen nicht überein, so führt die Geldkassette 10 den Befehl nicht aus und erzeugt Daten mit Informationen über eine Fehlermeldung, die sie an die Vorrichtung 30, 54, 62, 72 überträgt.

Durch das zuvor beschriebene Challenge-Response-Verfahren wird ein hohes Maß an Übertragungssicherheit erreicht. Somit wird insbesondere Manipulationsversuchen vorgebeugt.

Bei einer alternativen Ausführungsform der Erfindung können auch andere als das zuvor beschriebene Challenge-Response-Verfahren für die Kommunikation zwischen der Geldkassette 10 und der Vorrichtung 30, 54, 62, 72 verwendet werden. Des Weiteren ist alternativ möglich, dass auch andere Kommunikationsverfahren als ein Challenge-Response-Verfahren für diese Kommunikation genutzt werden.

### Bezugszeichenliste

- 10: Geldkassette
- 12: Entwertungseinheit
- 14: Steuereinheit
- 16: Mikrocontroller
- 18, 20: Speicherelement
- 22, 34: Steckverbinder
- 30: Vorrichtung
- 32: Sende- und Empfangseinheit
- 36: Steuereinheit
- 38, 40: Sub-Steuereinheit
- 42: USB-Datenübertragungsverbindung
- 44: CAN-Bus
- 50, 52: Bank
- 54: Geldautomat
- 56, 58, 64, 68: Gerätegruppen
- 60: Handelsunternehmen
- 62: automatische Tresorkasse
- 66: Werttransportunternehmen
- 70: Wertscheintransportfahrzeug
- 72: Rack
- S10 bis S22: Verfahrensschritt
- A, B, C, D, P: Schlüssel

## Patentansprüche

1. Verfahren zur Betreiben einer Geldkassette,
bei dem werkseitig bei der Herstellung der Geldkassette (10) in einem Speicherelement (18) einer Steuereinheit (14) der Geldkassette (10) Programmdaten eines Produktionsbootprogramms zum Booten der Geldkassette (10) und ein Produktionsschlüssel (P) zum Verschlüsseln von von der Geldkassette (10) ausgesandten Daten und/oder zum Entschlüsseln von empfangenen Daten gespeichert werden,
bei dem die Geldkassette (10) zur Inbetriebnahme in eine Vorrichtung zur Aufnahme von Geldkassetten eingesetzt und einen Datenübertragungsverbindung zwischen der Vorrichtung und der Geldkassette (10) hergestellt wird, und
bei dem die Programmdaten des Produktionsbootprogramms durch Programmdaten eines Betriebsbootprogramms zum Booten der Geldkassette (10) und der Produktionsschlüssel (P) durch einen kundenspezifischen Betriebsschlüssel (A) zum Verschlüsseln von von der Geldkassette (10) ausgesandten Daten und/oder zum Entschlüsseln von empfangenen Daten ersetzt werden.

2. Verfahren nach Anspruch 1, **dadurch gekennzeichnet, dass** das Produktionsbootprogramm durch ein kundenspezifisches Betriebsbootprogramm ersetzt wird.

3. Verfahren nach Anspruch 1, **dadurch gekennzeichnet, dass** das Produktionsbootprogramm zunächst durch ein Standard-Betriebsbootprogramm ersetzt wird, dass anschließend Daten mit Informationen über den kundenspezifischen Betriebsschlüssel (A) über die Datenübertragungsverbindung von der Vorrichtung zu der Geldkassette (10) übertragen werden, und dass dann der Produktionsschlüssel (P) durch den kundenspezifischen Betriebsschlüssel (A) ersetzt wird.

4. Verfahren nach Anspruch 3, **dadurch gekennzeichnet, dass** die Vorrichtung die Daten mit den Informationen über die kundenspezifischen Betriebsschlüssel (A) mit Hilfe des Produktionsschlüssels (P) verschlüsselt, und dass die Steuereinheit (14) der Geldkassette (10) diese Daten mit Hilfe des Produktionsschlüssels (P) entschlüsselt.

5. Verfahren nach einem der vorhergehenden Ansprüche, **dadurch gekennzeichnet, dass** die Programmdaten des Betriebsbootprogramms und/oder der kundenspezifische Betriebsschlüssel (A) zunächst von der Vorrichtung mit Hilfe des Produktionsschlüssels (P) verschlüsselt werden, dann verschlüsselt über die Datenübertragungsverbindung an die Geldkassette (10) übertragen werden, und anschließend von der Steuereinheit (14) der Geldkassette (10) mit Hilfe des Produktionsschlüssels (P) entschlüsselt werden.

6. Verfahren nach Anspruch 4 oder 5, **dadurch gekennzeichnet, dass** die Daten mit Hilfe eines Blockverschlüsselungsalgorithmus verschlüsselt werden.

7. Verfahren nach einem der vorhergehenden Ansprüche, **dadurch gekennzeichnet, dass** der kundenspezifische Betriebsschlüssel (A) in einem Speicherelement mindestens einer Vorrichtung (30, 54, 62, 72) zur Handhabung von Wertscheinen, in die die Geldkassette (10) im Betrieb eingesetzt werden soll, gespeichert wird, und dass zwischen dieser Vorrichtung (30, 54, 62, 72) und der in die Vorrichtung (30, 54, 62, 72) eingesetzten Geldkassette (10) übertragene Daten mit Hilfe des kundenspezifischen Betriebsschlüssels (A) verschlüsselt übertragen werden.

8. Verfahren nach einem der vorhergehenden Ansprüche, **dadurch gekennzeichnet, dass** in dem Speicherelement (18) mehrere kundenspezifische Betriebsschlüssel (A, B, C, D) gespeichert werden, dass in Speicherelementen mehrerer Vorrichtungen (30, 54, 62, 72) zur Handhabung von Wertscheinen jeweils mindestens einer dieser Betriebsschlüssel (A, B, C, D) gespeichert wird, und dass jeweils zwischen einer dieser Vorrichtungen (30, 54, 62, 72) und der in diese Vorrichtung (30, 54, 62, 72) eingesetzten Geldkassette (10) übertragene Daten mit Hilfe des entsprechenden kundenspezifischen Betriebsschlüssels (A, B, C, D) verschlüsselt übertragen werden.

9. Verfahren nach einem der vorhergehenden Ansprüche, **dadurch gekennzeichnet, dass** die Daten zwischen der Geldkassette (10) und der Vorrichtung zur Handhabung von Wertscheinen (30, 54, 62, 72) in einem Challenge-Response-Verfahren übertragen werden.

10. Verfahren nach Anspruch 9, **dadurch gekennzeichnet, dass** beim dem Challenge-Response-Verfahren in einem ersten Schritt Daten mit Informationen zur Anforderung einer Zufallszahl von der Vorrichtung (30, 54, 62, 72) zur Handhabung von Wertscheinen an die Geldkassette (10) übertragen werden, dass in einem zweiten Schritt die Geldkassette (10) mit Hilfe eines in der Steuereinheit (14) hinterlegten Zufallszahlenerzeugungsalgorithmus eine Zufallszahl erzeugt und diese verschlüsselt an die Vorrichtung (30, 54, 62, 72) überträgt, dass in einem dritten Schritt die Vorrichtung (30, 54, 62, 72) die verschlüsselte Zufallszahl entschlüsselt und Daten mit mindestens einem Steuerungsbefehl erzeugt, wobei diese Daten die Zufallszahl umfassen, dass in einem vierten Schritt die Vorrichtung (30, 54, 62, 72) diese Daten mit dem kundenspezifischen Betriebsschlüssel (A) verschlüsselt und an die Geldkassette (10) überträgt, dass in einem fünften Schritt die Geldkassette (10) diese an sie übertragenen Daten mit Hilfe des kundenspezifischen Betriebsschlüssels (A) entschlüsselt und die in ihnen enthaltene Zufallszahl mit der im zweiten Schritt erzeugten und übertragen Zufallszahl vergleicht, und dass die Geldkassette (10) den von der Vorrichtung (30, 54, 62, 72) übertragenen Befehl nur dann ausführt, wenn der Vergleich ergibt, dass die Zufallszahlen übereinstimmen.

11. Verfahren nach einem der vorhergehenden Ansprüche, **dadurch gekennzeichnet, dass** der kundenspezifische Betriebsschlüssel (A) nur mit Hilfe des aktuellen kundenspezifischen Betriebsschlüssels (A) verändert werden kann.

12. Verfahren nach einem der vorhergehenden Ansprüche, **dadurch gekennzeichnet, dass** das Speicherelement (18) der Geldkassette (10) einen nichtflüchtigen Speicher, insbesondere einen Flash-Speicher, umfasst, in dem die Daten des Produktionsbootprogramms, die Daten des Betriebsbootprogramms, der Produktionsschlüssel (P) und/oder der Betriebsschlüssel (A, B, C, D) gespeichert sind.

13. Verfahren nach einem der vorhergehenden Ansprüche, **dadurch gekennzeichnet, dass** in dem Speicherelement (18) der Geldkassette (10) eine Firmware zum Betreiben der Geldkassette (10) gespeichert ist, und dass der kundenspezifische Betriebsschlüssel (A) als Teil dieser Firmware gespeichert wird.

14. Verfahren nach einem der vorhergehenden Ansprüche, **dadurch gekennzeichnet, dass** in dem Speicherelement (18) der Geldkassette (10) eine Firmware zum Betreiben der Geldkassette (10) gespeichert ist, dass die Firmware eine Signatur umfasst, und dass die Steuereinheit (14) der Geldkassette (10) in Abhängigkeit der Signatur die Zulässigkeit der Firmware ermittelt.

15. Verfahren nach einem der vorhergehenden Ansprüche, **dadurch gekennzeichnet, dass** in dem Speicherelement (18) der Geldkassette (10) eine Firmware zum Betreiben der Geldkassette (10) gespeichert ist, und dass die Firmware nur mit Hilfe des aktuellen kundenspezifischen Betriebsschlüssels (A) verändert werden kann.

## Claims

1. Method for operating a cash box,
in which program data of a production boot loader for booting the cash box (10) and a production key (P) for encrypting data sent by the cash box (10) and/or for decrypting received data is stored in a memory element (18) of a control unit (14) of the cash box (10) at the factory during manufacture of the cash box (10),
in which, for commencing operation, the cash box (10) is inserted in a device for receiving cash boxes and a data transfer connection is established between the device and the cash box (10), and
in which the program data of the production boot loader is replaced by program data of an operation boot loader for booting the cash box (10) and the production key (P) is replaced by a customer-specific operation key (A) for encrypting data sent by the cash box (10) and/or for decrypting received data.

2. Method according to Claim 1, **characterized in that** the production boot loader is replaced by a customer-specific operation boot loader.

3. Method according to Claim 1, **characterized in that** the production boot loader is first replaced by a standard operation boot loader, **in that** subsequently data with information relating to the customer-specific operation key (A) is transferred via the data transfer connection from the device to the cash box (10), and **in that** the production key (P) is then replaced by the customer-specific operation key (A).

4. Method according to Claim 3, **characterized in that** the device encrypts the data with the information relating to the customer-specific operation key (A) using the production key (P), and **in that** the control unit (14) of the cash box (10) decrypts said data using the production key (P).

5. Method according to any of the preceding claims, **characterized in that** the program data of the operation boot loader and/or the customer-specific operation key (A) is first encrypted by the device using the production key (P), then transferred in encrypted form via the data transfer connection to the cash box (10), and subsequently decrypted by the control unit (14) of the cash box (10) using the production key (P).

6. Method according to Claim 4 or 5, **characterized in that** the data is encrypted using a block encryption algorithm.

7. Method according to any of the preceding claims, **characterized in that** the customer-specific operation key (A) is stored in a memory element of at least one device (30, 54, 62, 72) for handling notes of value, in which device the cash box (10) is to be inserted during operation, and **in that** data transferred between said device (30, 54, 62, 72) and the cash box (10) inserted in the device (30, 54, 62, 72) is transferred in encrypted form using the customer-specific operation key (A).

8. Method according to any of the preceding claims, **characterized in that** a plurality of customer-specific operation keys (A, B, C, D) are stored in the memory element (18), **in that** in each case at least one of said operation keys (A, B, C, D) is stored in memory elements of a plurality of devices (30, 54, 62, 72), and **in that** data transferred in each case between one of said devices (30, 54, 62, 72) and the cash box (10) inserted in said device (30, 54, 62, 72) is transferred in encrypted form using the corresponding customer-specific operation key (A, B, C, D).

9. Method according to any of the preceding claims, **characterized in that** the data is transferred between the cash box (10) and the device (30, 54, 62, 72) for handling notes of value in a challenge-response method.

10. Method according to Claim 9, **characterized in that**, in the challenge-response method, in a first step, data with information relating to the request for a random number from the device (30, 54, 62, 72) for handling notes of value is transferred to the cash box (10), **in that**, in a second step, the cash box (10) generates a random number using a random number generating algorithm stored in the control unit (14) and transmits said random number in encrypted form to the device (30, 54, 62, 72), **in that**, in a third step, the device (30, 54, 62, 72) decrypts the encrypted random number and generates data using at least one control command, wherein said data comprises the random number, **in that**, in a fourth step, the device (30, 54, 62, 72) encrypts said data with the customer-specific operation key (A) and transfers it to the cash box (10), **in that**, in a fifth step, the cash box (10) decrypts said data transferred to it using the customer-specific operation key (A) and compares the random number contained in said data to the random number generated and transferred in the second step, and **in that** the cash box (10) only executes the command transferred by the device (30, 54, 62, 72) if the comparison shows that the random numbers are identical.

11. Method according to any of the preceding claims, **characterized in that** the customer-specific operation key (A) can only be changed using the current customer-specific operation key (A).

12. Method according to any of the preceding claims, **characterized in that** the memory element (18) of the cash box (10) comprises a non-volatile memory, in particular a flash memory, in which the data of the production boot loader, the data of the operation boot loader, the production key (P) and/or the operation key (A, B, C, D) is stored.

13. Method according to any of the preceding claims, **characterized in that** firmware for operating the cash box (10) is stored in the memory element (18) of the cash box (10), and **in that** the customer-specific operation key (A) is stored as part of said firmware.

14. Method according to any of the preceding claims, **characterized in that** firmware for operating the cash box (10) is stored in the memory element (18) of the cash box (10), **in that** the firmware comprises a signature, and **in that** the control unit (14) of the cash box (10) ascertains the legitimacy of the firmware on the basis of the signature.

15. Method according to any of the preceding claims, **characterized in that** firmware for operating the cash box (10) is stored in the memory element (18) of the cash box (10), and **in that** the firmware can only be changed using the current customer-specific operation key (A).

## Revendications

1. Procédé pour exploiter une cassette de billets,
dans lequel, côté usine lors de la fabrication de la cassette de billets (10), on enregistre, dans un élément de mémoire (18) d'une unité de commande (14) de la cassette de billets (10), des données de programme d'un programme d'amorçage de production pour l'amorçage de la cassette de billets (10) et une clé de production (P) pour le chiffrement de données envoyées par la cassette de billets (10) et/ou pour le déchiffrement de données reçues,
dans lequel, pour la mise en service, la cassette de billets (10) est insérée dans un dispositif pour la réception de cassettes de billets, et une connexion de transmission de données est établie entre le dispositif et la cassette de billets (10), et
dans lequel on remplace les données de programme du programme d'amorçage de production par des données de programme d'un programme d'amorçage de service pour amorcer la cassette de billets (10) et la clé de production (P) par une clé de service (A) spécifique au client pour le chiffrement de données envoyées par la cassette de billets (10) et/ou pour le déchiffrement de données reçues.

2. Procédé selon la revendication 1, **caractérisé en ce que** le programme d'amorçage de production est remplacé par un programme d'amorçage de service spécifique au client.

3. Procédé selon la revendication 1, **caractérisé en ce que** le programme d'amorçage de production est tout d'abord remplacé par un programme d'amorçage de service standard, **en ce que** des données avec des informations sur la clé de service (A) spécifique au client sont ensuite transmises, via la connexion de transmission de données, du dispositif à la cassette de billets (10), et **en ce que** la clé de production (P) est ensuite remplacée par la clé de service (A) spécifique au client.

4. Procédé selon la revendication 3, **caractérisé en ce que** le dispositif assure le chiffrement des données avec les informations sur les clés de service (A) spécifiques au clients à l'aide de la clé de production (P), et **en ce que** l'unité de commande (14) de la cassette de billets (10) déchiffre ces données à l'aide de la clé de production (P).

5. Procédé selon l'une des revendications précédentes, **caractérisé en ce que** les données de programme du programme de d'amorçage de service et/ou la clé de service (A) spécifique au client sont tout d'abord chiffrées par le dispositif à l'aide de la clé de production (P), ensuite transmises de manière chiffrée, via la connexion de transmission de données, à la cassette de billets (10), et sont ensuite déchiffrées par l'unité de commande (14) de la cassette de billets (10) à l'aide de la clé de production (P).

6. Procédé selon la revendication 4 ou 5, **caractérisé en ce que** les données sont chiffrées à l'aide d'un algorithme de chiffrement par blocs.

7. Procédé selon l'une des revendications précédentes, **caractérisé en ce que** la clé de service (A) spécifique au client est enregistrée dans un élément de mémoire d'au moins un dispositif (30, 54, 62, 72) pour le maniement de papiers de valeur dans lequel la cassette de billets (10) doit être insérée lors du service, et **en ce que** des données transmises entre ce dispositif (30, 54, 62, 72) et la cassette de billets (10) insérée dans le dispositif (30, 54, 62, 72) sont transmises de manière chiffrée à l'aide de la clé de service (A) spécifique au client.

8. Procédé selon l'une des revendications précédentes, **caractérisé en ce que** plusieurs clés de service (A, B, C, D) spécifiques au client sont enregistrées dans l'élément de mémoire (18), **en ce que** l'on enregistre, dans des éléments de mémoire de plusieurs dispositifs (30, 54, 62, 72) pour le maniement de papiers de valeur, respectivement au moins l'une de ces clés de service (A, B, C, D), et **en ce que** des données transmises respectivement entre l'un de ces dispositifs (30, 54, 62, 72) et la cassette de billets (10) insérée dans ce dispositif (30, 54, 62, 72) sont transmises de manière chiffrée à l'aide de la clé de service (A, B, C, D) correspondante spécifique au client.

9. Procédé selon l'une des revendications précédentes, **caractérisé en ce que** les données sont transmises entre la cassette de billets (10) et le dispositif pour le maniement de papiers de valeur (30, 54, 62, 72) selon un procédé de Challenge/Response.

10. Procédé selon la revendication 9, **caractérisé en ce que**, avec le procédé de Challenge/Response, dans une première étape, des données avec des informations pour la demande d'un nombre aléatoire sont transmises par le dispositif (30, 54, 62, 72) pour le maniement de papiers de valeur à la cassette de billets (10), **en ce que**, dans une deuxième étape, la cassette de billets (10) génère un nombre aléatoire à l'aide d'un algorithme de génération de nombres aléatoires enregistré dans le dispositif de commande (14) et transmet celui-ci de manière chiffrée au dispositif (30, 54, 62, 72), **en ce que**, dans une troisième étape, le dispositif (30, 54, 62, 72) déchiffre le nombre aléatoire chiffré et génère des données avec au moins une instruction de commande, ces données englobant le nombre aléatoire, **en ce que**, dans une quatrième étape, le dispositif (30, 54, 62, 72) chiffre ces données avec la clé de service (A) spécifique au client et les transmet à la cassette de billets (10), **en ce que**, dans une cinquième étape, la cassette de billets (10) déchiffre ces données lui ayant été transmises, à l'aide de la clé de service (A) spécifique au client et compare le nombre aléatoire qu'elles contiennent avec le nombre aléatoire généré et transmis lors de la deuxième étape, et **en ce que** la cassette de billets (10) exécute l'instruction transmise par le dispositif (30, 54, 62, 72) seulement si la comparaison indique que les nombres aléatoires coïncident.

11. Procédé selon l'une des revendications précédentes, **caractérisé en ce que** la clé de service (A) spécifique au client peut seulement être modifiée à l'aide de la clé de service (A) spécifique au client actuelle.

12. Procédé selon l'une des revendications précédentes, **caractérisé en ce que** l'élément de mémoire (18) de la cassette de billets (10) comprend une mémoire non volatile, en particulier une mémoire flash, dans laquelle les données du programme d'amorçage de production, les données du programme d'amorçage de service, la clé de production (P) et/ou la clé de service (A, B, C, D) sont enregistrées.

13. Procédé selon l'une des revendications précédentes, **caractérisé en ce que**, dans l'élément de mémoire (18) de la cassette de billets (10), un micrologiciel pour l'exploitation de la cassette de billets (10) est enregistré et **en ce que** la clé de service (A) spécifique au client est enregistrée en tant que partie de ce micrologiciel.

14. Procédé selon l'une des revendications précédentes, **caractérisé en ce que**, dans l'élément de mémoire (18) de la cassette de billets (10), un micrologiciel pour l'exploitation de la cassette de billets (10) est enregistré, **en ce que** le micrologiciel comprend une signature, et **en ce que** l'unité de commande (14) de la cassette de billets (10) détermine l'admissibilité du micrologiciel en fonction de la signature.

15. Procédé selon l'une des revendications précédentes, **caractérisé en ce que**, dans l'élément de mémoire (18) de la cassette de billets (10), un micrologiciel pour l'exploitation de la cassette de billets (10) est enregistré et **en ce que** le micrologiciel peut être modifié seulement à l'aide de la clé de service (A) spécifique au client actuelle.
